Europäisches Patentamt

European Patent Office

Office européen des brevets

(11) Veröffentlichungsnummer: **0 274 682 B1**

# EUROPÄISCHE PATENTSCHRIFT

(45) Veröffentlichungstag der Patentschrift: 06.03.91

(51) Int. Cl.⁵: **F16C 13/00**, F16C 29/04

(21) Anmeldenummer: 87118375.2

(22) Anmeldetag: **11.12.87**

(54) **Führungsrolle.**

(30) Priorität: **10.01.87 DE 8700475 U**

(43) Veröffentlichungstag der Anmeldung:
**20.07.88 Patentblatt 88/29**

(45) Bekanntmachung des Hinweises auf die
Patenterteilung:
**06.03.91 Patentblatt 91/10**

(84) Benannte Vertragsstaaten:
**AT CH DE FR GB IT LI**

(56) Entgegenhaltungen:
**DE-A- 3 038 112**       FR-A- 1 212 275
**GB-A- 681 412**         GB-A- 2 147 957
**US-A- 3 876 266**       US-A- 4 204 719
**US-A- 4 215 905**       US-A- 4 541 742

(73) Patentinhaber: **NADELLA-Wälzlager GmbH**
**Tränkestrasse 7**
**W-7000 Stuttgart 70 Degerloch(DE)**

(72) Erfinder: **Fritz, Robert G.**
**Blankensteinstrasse 1**
**W-7127 Pleidelsheim(DE)**

(74) Vertreter: **Patentanwälte Phys. Bartels**
**Dipl.-Ing. Fink Dr.-Ing. Held**
**Lange Strasse 51**
**W-7000 Stuttgart 1(DE)**

## Beschreibung

Die Erfindung betrifft eine Führungsrolle zum Führen einer Schiene mit zwei Laufringen, die mittels Lagerkörper drehbar auf einer Achse gelagert sind, die die Laufringe auf dieser Achse axial und radial abstützen, wobei die radial äußeren Ränder der einander zugekehrten Seiten der Laufringe als Führungsflächen für die Schiene ausgebildet sind.

Eine dahingehende Führungsrolle ist in der GB-A-681 412 beschrieben. Bei dieser bekannten Führungsrolle werden die beiden Laufringe mit ihren einander zugekehrten Seiten, die die Führungsflächen für die Schiene bilden, vorab auf einen vorgebbaren Abstand voneinander derart eingestellt, daß das üblicherweise zwischen den Lagerkörpern und den Laufringen herrschende Spiel beseitigt ist und demgemäß die Schiene sich zunächst spielfrei führen läßt. Im Betrieb der Führungsrolle stellt sich aber bereits nach kurzer Zeit aufgrund der herrschenden Fertigungstoleranzen wieder ein Spiel ein, das durch entsprechendes Nachstellen der Führungsrolle zu beseitigen ist.

Es ist zwar schon vorgeschlagen worden, um ein dahingehendes mehrfaches Nachstellen der Führungsrolle zu vermeiden, die die axiale Abstützung vornehmenden Teile der Lagerkörper mittels auf die Achse aufschraubbarer Flanschteile gegen die Laufringe zu verspannen. Dies führt aber dazu, daß die für das Verspannen notwendigen hohen Kräfte auf die Lagerkörper wirken und deren Tragzahl sowie Lebensdauer reduzieren.

Durch die US-A-3 876 266 ist es bekannt, ein vorgespanntes, elastisch nachgiebiges Glied in einem Lager vorzusehen, das die beiden Laufringe auseinander zumindest gegen die die axiale Abstützung vornehmenden Teile der Lagerkörper drückt. Dieses bekannte Lager wird dort eingesetzt, wo eine ungleichmäßige oder schlagartige Beanspruchung durch ungleichförmige Kräfte bzw. Stöße zu erwarten ist. Das Führen einer Schiene mit dem dort beschriebenen Lager ist nicht möglich.

Ausgehend von dem zuerst genannten Stand der Technik liegt der Erfindung die Aufgabe zugrunde, Führungsrollen zum Führen einer Schiene dahingehend zu verbessern, daß ein spielfreier Lauf über ihre gesamte Einsatzdauer gewährleistet ist, ohne daß sich die Tragzahl oder die Lebensdauer der Lagerkörper verringert. Diese Aufgabe wird durch die Merkmale des Hauptanspruchs erfindungsgemäß gelöst.

Mit der erfindungsgemäßen Lösung wird erreicht, daß, anders als bei den bekannten Führungsrollen, zum Führen einer Schiene die beiden Laufringe einen vorgebbaren Abstand voneinander genau einnehmen, den sie auch über ihre gesamte Einsatzdauer beibehalten. Das üblicherweise zwischen den Lagerkörpern und den Laufringen herrschende Spiel ist mit Sicherheit beseitigt und die Führungsrolle führt von Anfang an die Schiene spielfrei, ohne daß ein Nachstellen der Führungsrolle im späteren Betrieb erforderlich wäre, wobei gewährleistet ist, daß keine die Lagerkörper schädigenden Kräfte auftreten.

Auch ist das Spielfreimachen der Führungsrolle mittels eines vorgespannten elastisch nachgiebigen Gliedes einfach zu verwirklichen und damit kostengünstig. Die radial äußeren Ränder der einander zugekehrten Seiten der Laufringe Führungsflächen für die Schiene bilden, die einen sich radial nach außen erweiternden Raum begrenzen. Hierdurch wird erreicht, daß die von der Schiene auf die Führungsflächen ausgeübte Kraft zumindest mit einer axialen Komponente in der gleichen Richtung mit der angreifenden Kraft des elastischen Gliedes wirkt, so daß auch bei entsprechender Belastung der Schiene oder der Führungsrolle die Laufringe gegen die die axiale Abstützung vornehmenden Teile der Lagerkörper gedrückt werden, was die Spielfreiheit des aus Schiene und Führungsrolle bestehenden Systems auch bei Belastung gewährleistet.

Bei einer bevorzugten Ausführungsform können die beiden einander zugekehrten Seiten der Laufringe einen Ringspalt begrenzen, in dem das vorgespannte elastische Glied angeordnet ist. Hierdurch wird eine besonders einfache Konstruktion der Führungsrolle erreicht und deren Zusammenbau bei der Montage erleichtert.

Bei einer weiteren vorteilhaften Ausführungsform können für die radiale und die axiale Abstützung der beiden Laufringe auf der Achse als Lagerkörper Wälzkörper vorgesehen sein, die zwischen den Laufringen und der Achse bzw. zwischen einer dem Ringspalt abgekehrten Seite des jeweiligen Laufringes und einem dieser Seite zugekehrten, mit der Achse fest verbundenen Teil vorgesehen sind, der eine Lauffläche für das Abrollen der Wälzkörper aufweist. Somit können handelsübliche Lager, beispielsweise Nadel- oder Schrägkugellager für die Führungsrolle Verwendung finden, die sehr preisgünstig sind, so daß die Führungsrolle als Ganzes sehr preisgünstig ist.

Das vorgespannte Glied kann aus einer Tellerfeder oder einer Schraubenfeder gebildet sein. Hierdurch können für das vorgespannte Glied handelsübliche Federn Verwendung finden, die ebenfalls sehr preisgünstig sind. Da sich außerdem die Federcharakteristik dieser Federn auswählen läßt, können innerhalb gewisser Grenzen die an den Laufringen angreifenden Federkräfte je nach Anwendungsfall frei gewählt werden.

Bei einer besonders bevorzugten Ausführungsform kann das vorgespannte Glied ein Ring aus weichelastischem Material sein, beispielsweise ein O-Ring aus Gummi. Dies hat den Vorteil, daß dieser Ring, der sehr preisgünstig ist, nicht nur die Funktion des vorgespannten elastischen Gliedes übernimmt, sondern gleichzeitig das Innere der Führungsrolle an der Stelle des Ringspaltes gegenüber der Umgebung abdichtet, so daß die Lagerkörper über den Ringspalt nicht verschmutzt werden können.

Zwischen den Laufringen kann eine Dichtung vorhanden sein. Dies ist vor allem dann von Vorteil, wenn kein Ring aus weichelastischem Material das vorgespannte elastische Glied bildet, sondern dies aus Teller- oder Schraubenfedern besteht, die in der Regel keine ausreichende Dichtfunktion übernehmen können.

Zwischen der dem Ringspalt abgekehrten Seite des jeweiligen Laufringes und dem dieser Seite zugekehrten, mit der Achse fest verbundenen Teil kann eine zweite Dichtung vorhanden sein. Diese dichtet ebenfalls das Innere der Führungsrolle von der Umgebung ab.

Bei einer bevorzugten Ausführungsform kann diese Dichtung aus einem Ring aus einem weichelastischen Material bestehen, der zwischen einer konisch verlaufenden Fläche des mit der Achse fest verbundenen Teils und einer Fläche des jeweiligen Laufringes vorgespannt ist. Dies hat den Vorteil, daß der Ring auf Grund seiner Eigenspannung sich immer exakt an die konisch verlaufende Fläche des mit der Achse fest verbundenen Teils und der Fläche des jeweiligen Laufringes anlegen will, so daß das Innere der Führungsrolle von der Umgebung abgedichtet ist.

Die Erfindung ist in der folgenden Beschreibung an Hand von zwei Ausführungsbeispielen im einzelnen erläutert.

Es zeigen:

Fig. 1 ein erstes Ausführungsbeispiel der Führungsrolle, wobei die obere Hälfte der Figur teilweise einen Schnitt, sowie teilweise eine Ansicht, und die untere Hälfte eine Ansicht darstellen;

Fig. 2 eine der Fig.1 entsprechende Darstellung eines zweiten Ausführungsbeispiels der Führungsrolle;

Fig. 3 und 4 im Detailkreis X der beiden Ausführungsbeispiele einsetzbare Varianten von elastisch nachgiebigen Gliedern.

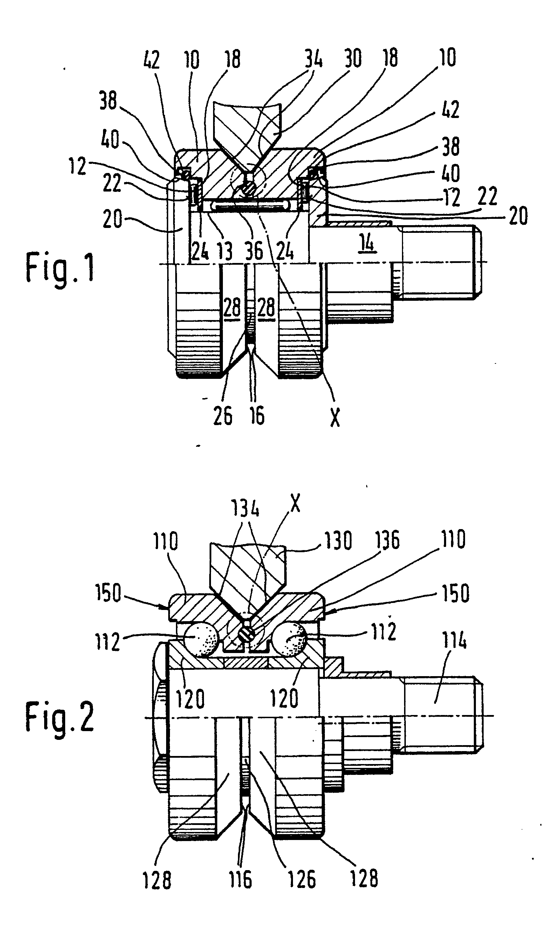

Die in Fig. 1 teilweise im Schnitt, teilweise in Ansicht dargestellte Führungsrolle weist zwei durch einen Ringspalt 26 voneinander getrennte Laufringe 10 auf, die mittels Nadelrollen 12 drehbar auf einer Achse 14 gelagert sind. Um die Laufringe 10 auf dieser Achse 14 axial und radial abzustützen, befinden sich die Nadelrollen 12 zwischen den Laufringen 10 und einer zylindrischen Lauffläche 13 der Achse 14 sowie zwischen einer dem Ringspalt 26 abgekehrten Seite 18 des jeweiligen Laufringes 10 und einem dieser Seite 18 zugekehrten, mit der Achse, beispielsweise über eine Schraubverbindung (nicht dargestellt) fest verbundenen Teil 20, der eine Lauffläche 22 für das Abrollen der Nadelrollen 12 aufweist. Dabei ist zwischen den Seiten 18 der Laufringe 10 und den Nadelrollen 12 noch eine Laufscheibe 24 vorgesehen.

Der radial äußere Teil des Ringspaltes 26 ist von zwei kegelstumpfförmigen Führungsflächen 28 für eine an diese angepaßte Schiene 30 (in Fig.1 nur teilweise dargestellt) begrenzt, die eine sich radical nach außen konisch erweiternde Führungsnut bilden, in der die Schiene 30 mit ihren beiden konisch zueinander verlaufenden Laufflächen 34 eingreift. Im radial inneren Teil des Ringspaltes 26 ist als vorgespanntes elastisch nachgiebiges Glied ein O-Ring 36 aus weichelastischem Material, z.B. Gummi, angeordnet. Dieser O-Ring 36 drückt die beiden Laufringe 10 auseinander gegen die die axiale Abstützung vornehmenden Nadelrollen 12, so daß die Laufringe 10 in axialer Richtung spielfrei sind. Darüberhinaus dichtet der O-Ring 36 das Innere der Führungsrolle an der Stelle des Ringspaltes 26 gegenüber der Umgebung ab und wirkt so gleichzeitig auch als Dichtring.

Zwischen den Seiten 18 der Laufringe 10 und den diesen Seiten 18 zugekehrten, mit der Achse fest verbundenen beiden Teilen 20 ist jeweils eine zweite Dichtung vorhanden. Diese zweite Dichtung besteht auch aus einem O-Ring 38 aus Gummi, der auf einer konisch verlaufenden Fläche 40 des mit der Achse 14 fest verbundenen Teils 20 sitzt und von einer Dichtfläche der Seite 18 auf der Fläche 40 vorgespannt ist. Somit wird zusammen mit dem O-Ring 36 das Innere der Führungsrolle vollständig gegenüber der Umgebung abgedichtet.

Zum Schmieren der Führungsrolle kann über einen in der Achse 14 verlaufenden Schmiermittelkanal (nicht dargestellt) Schmiermittel in den Zwischenraum zwischen den beiden Laufringen 10 und der Achse 14 zugeführt werden, so daß die Nadelrollen 12 ständig mit Schmiermittel versorgt sind.

Bei anwachsendem Druck des Schmiermittels werden dann die beiden O-Dichtringe 38 entgegen ihrer Vorspannung auf den beiden konisch verlaufenden Flächen 40 nach außen bewegt, so daß sie zwei umlaufende Spalten 42 freigeben, über die das durch die Achse 14 zugeführte Schmiermittel nach außen treten kann. Während dieses Vorganges kann kein Schmutz, Wasser od.dgl. entgegen dem Schmiermittelstrom in das Innere der Führungsrolle gelangen. Bei abnehmendem Druck des Schmiermittels im Inneren der Führungsrolle bewegen sich die beiden O-Ringe 38 auf Grund ihrer Vorspannung auf den beiden konisch verlaufenden Flächen 40 wieder nach innen und legen sich an die jeweilige Dichtfläche der abgekehrten Seiten 18 der Laufringe 10 an. Das Innere der Führungsrolle ist somit zu jeder Zeit gegenüber der Umgebung abgedichtet.

Bei dem in Fig.2 dargestellten zweiten Ausführungsbeispiel sind diejenigen Teile, die dem Ausführungsbeispiel nach der Fig.1 entsprechen, mit um 100 vergrößerten Bezugszahlen bezeichnet, so daß durch die Verwendung dieser Bezugszahlen auf die Beschreibung des ersten Ausführungsbeispiels nach Fig.1 Bezug genommen wird.

Das zweite Ausführungsbeispiel unterscheidet sich vom ersten Ausführungsbeispiel zunächst dadurch, daß für die radiale und die axiale Abstützung anstelle von Nadellagern Schrägkugellager 150 vorgesehen sind, deren Innenringe 120 beispielsweise durch Aufschrumpfen fest auf der Achse 114 sitzen und deren Außenringe die Laufringe 110 bilden.

Ein weiterer Unterschied besteht darin, daß das elastisch vorgespannte Glied in Form eines O-Ringes 136 die beiden Laufringe 110 nicht nur gegen die axiale, sondern auch gegen die die radiale Abstützung vornehmenden Teile der Lagerkörper, in diesem Fall der Kugeln 112, drückt.

Da die Schiene 130 auf die Laufringe 110 in der gleichen Richtung wie die axiale und radiale Kraftkomponente, die durch den O-Ring 136 ausgeübt werden, wirkt, bleibt die Führungsrolle nicht nur axial, sondern auch radial spielfrei.

Im Bedarfsfall kann durch entsprechend konstruktive Anpassung an das erste Ausführungsbeispiel die Führungsrolle nach dem zweiten Ausführungsbeispiel auch das Dichtsystem des ersten Ausführungsbeispiels, bestehend aus O-Ringen 38 und konisch verlaufenden Flächen 40, erhalten. Außerdem können als Lagerkörper anstelle von Wälzkörpern, wie Nadelrollen und Kugeln, Gleitlagerkörper Verwendung finden. So können beispielsweise bei dem ersten Ausführungsbeispiel anstelle der Nadelrollen 12 zwei Gleitlagerbuchsen mit je einem Flansch treten. Dabei übernehmen die beiden Gleitlagerbuchsen mit ihrem zylindrischen Teil die radiale Abstützung und mit ihrem jeweiligen Flanschteil, der zwischen der dem Ringspalt 26 abgekehrten Seite 18 des jeweiligen Laufringes 10 und dem festen Teil 20 anordenbar ist, die axiale Abstützung der Laufringe 10 auf der Achse 14.

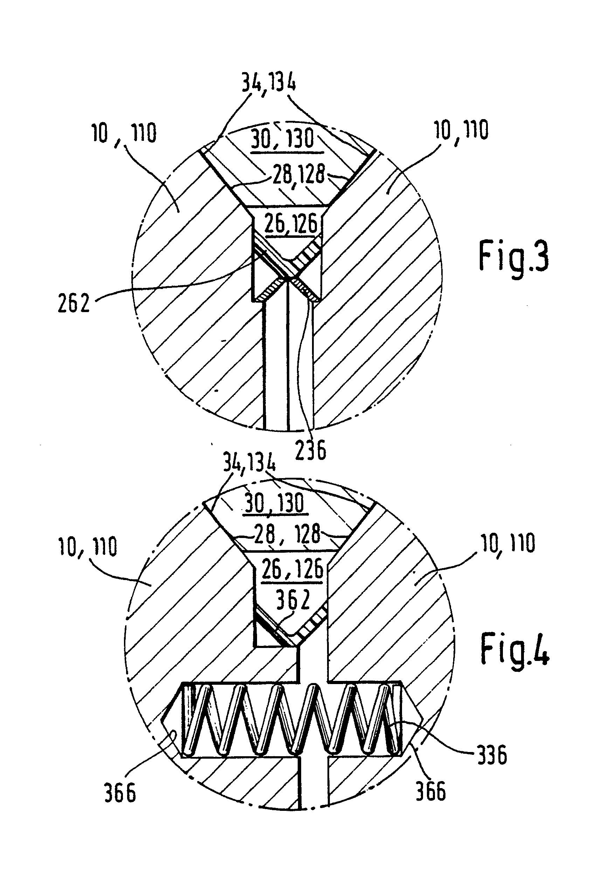

Fig.3 zeigt eine aus einer ringförmigen Tellerfeder 236 bestehende Variante eines vorgespannten elastischen Gliedes, die die Achse 14, 114 umfaßt. Anstelle einer solchen ringförmigen Tellerfeder 236 können mehrere einzelne Tellerfedern, beispielsweise drei, ohne die Achse 14 oder 114 zu umfassen, gleichmäßig um diese verteilt innerhalb des Ringspaltes 26,126 angeordnet sein. Will man auch hier eine vollständige Abdichtung des Inneren der Führungsrolle an der Stelle der Ringnut 26,126 gegenüber der Umgebung erreichen, kann man, wie dies die Fig. 3 zeigt, einen zusätzlichen Dichtring 262 im Ringspalt 26, 126 anordnen.

Fig.4 zeigt eine weitere Variante eines vorgespannten elastischen Gliedes mit einer zusätzlichen Dichtung. Bei dieser Variante sind parallel zur Achse 14,114 sich erstreckende Schraubenfedern 336, mindestens jedoch drei, um die Enden dieser Schraubenfedern 336 in Aussparungen 366 der beiden Laufringe 10, 110 eingreifen. Statt mehrerer Schraubenfedern 336 kann auch nur eine Schraubenfeder (nicht dargestellt) Verwendung finden, die ringartig die Achse 14,114 umfassend im Ringspalt 26,126 angeordnet ist. Auch hier kann, um das Innere der Führungsrolle von der Umgebung an der Stelle des Ringspalts 26,126 abzudichten, in diesem ein Dichtring 362 vorgesehen sein.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

**Ansprüche**

1. Führungsrolle zum Führen einer Schiene mit zwei Laufringen (10,110), die mittels Lagerkörper drehbar auf einer Achse (14,114) gelagert sind, die die Laufringe (10,110) auf dieser Achse (14,114) axial und radial abstützen, wobei die radial äußeren Ränder der einander zugekehrten Seiten (16,116) der Laufringe (10,110) als Führungsflächen (28,128) für die Schiene (30,130) ausgebildet sind, dadurch gekennzeichnet, daß mindestens ein vorgespanntes, elastisch nachgiebiges Glied (36,136,236,336) vorhanden ist, das die beiden Laufringe (10,110) auseinander zumindest gegen die die axiale Abstützung vornehmenden Teile (12,112) der Lagerkörper drückt.

2. Führungsrolle nach Anspruch 1, dadurch gekennzeichnet, daß die beiden einander zugekehrten Seiten (16,116) der Laufringe (10,110) einen Ringspalt (26,126) begrenzen, in dem das vorgespannte elastische Glied (36,136,236,336) angeordnet ist.

3. Führungsrolle nach Anspruch 1 oder 2, dadurch gekennzeichnet, daß für die radiale und die axiale Abstützung der beiden Laufringe (10,110) auf der Achse (14,114) als Lagerkörper Wälzkörper (12,112) vorgesehen sind, die zwischen den Laufringen (10,110) und der Achse (14,114) bzw. zwischen einer dem Ringspalt (26,126) abgekehrten Seite (18,118) des jeweiligen Laufringes (10,110) und einem dieser Seite zugekehrten, mit der Achse fest verbundenen Teil (20,120) vorgesehen sind, der eine Lauffläche für das Abrollen der Wälzkörper (12,112) aufweist.

4. Führungsrolle nach einem der Ansprüche 1 bis 3, dadurch gekennzeichnet, daß das vorgespannte Glied aus mindestens einer Tellerfeder (236) gebildet ist.

5. Führungsrolle nach einem der Ansprüche 1 bis 3, dadurch gekennzeichnet, daß das vorgespannte Glied aus mindestens einer Schraubenfeder (336) gebildet ist.

6. Führungsrolle nach einem der Ansprüche 1 bis 5, dadurch gekennzeichnet, daß das vorgespannte Glied ein Ring (36, 136, 236) ist.

7. Führungsrolle nach Anspruch 6, dadurch gekennzeichnet, daß der Ring (36, 136) aus weichelastischem Material besteht.

8. Führungsrolle nach einem der Ansprüche 1 bis 7, dadurch gekennzeichnet, daß zwischen den Laufringen (10, 110) eine Dichtung (36, 136, 262, 362) vorhanden ist.

9. Führungsrolle nach Anspruch 9, dadurch gekennzeichnet, daß die Führungsflächen (28, 128) einen sich radial nach außen erweiternden Raum begrenzen.

10. Führungsrolle nach einem der Ansprüche 3 bis 9, dadurch gekennzeichnet, daß zwischen der dem Ringspalt (26) abgekehrten Seite (18) des jeweiligen Laufringes (10) und dem dieser Seite zugekehrten, mit der Achse (14) fest verbundenen Teil (20)eine Dichtung (38) vorhanden ist.

11. Führungsrolle nach Anspruch 10, dadurch gekennzeichnet, daß die Dichtung aus einem Ring (38) aus einem weichelastischen Material besteht, der zwischen einer konisch verlaufenden Fläche (40) des mit der Achse (14) fest verbundenen Teils (20) und einer Fläche des jeweiligen Laufringes (10) vorgespannt ist.

## Claims

1. Guiding roller for guiding a rail having two bearing races (10, 110) which are rotatably mounted by means of bearing bodies on a shaft (14, 114) which support the bearing races (10, 110) on this shaft (14, 114) axially and radially, the radially outward edges of the facing sides (16, 116) of the bearing races (10, 110) being formed as guide surfaces (28, 128) for the rail (30, 130), characterized in that at least one pretensioned resiliently pliable member (36, 136, 236, 336) is present and forces the two bearing races (10, 110) apart, at least towards the parts (12, 112) of the bearing bodies providing the axial support.

2. Guiding roller according to claim 1, characterized in that the two facing sides (16, 116) of the bearing races (10, 110) delimit an annular gap (26, 126) in which the pretensioned resilient member (36, 136, 236, 336) is disposed.

3. Guiding roller according to claim 1 or 2, characterized in that roller bodies (12, 112) are provided on the shaft (14, 114) as bearing bodies for radially and axially supporting the two bearing races (10, 110), and are provided between the bearing races (10, 110) and the shaft (14, 114) or between a side (18, 118), of the bearing race (10, 110) in each case, facing away from the annular gap (26, 126) and a part (20, 120) which faces the said side, is rigidly connected to the shaft and comprises a bearing surface on which the roller bodies (12, 112) may roll.

4. Guiding roller according to one of claims 1 to 3, characterized in that the pretensioned member is formed of at least one cup spring (236).

5. Guiding roller according to one of claims 1 to 3, characterized in that the pretensioned member is formed of at least one helical spring (336).

6. Guiding roller according to one of claims 1 to 5, characterized in that the pretensioned member is a ring (36, 136, 236).

7. Guiding roller according to claim 6, characterized in that the ring (36, 136) consists of soft resilient material.

8. Guiding roller according to one of claims 1 to 7, characterized in that a seal (36, 136, 262, 362) is provided between the bearing races (10, 110).

9. Guiding roller according to one of claims 1 to 8, characterized in that the guiding surfaces (28, 128) delimit a space which widens radially outwards.

10. Guiding roller according to one of claims 3 to 9, characterized in that a seal (38) is provided between the side (18), of the bearing race (10) in each case, facing away from the annular gap (26) and the part (20) which faces the said side and is rigidly connected to the shaft (14).

11. Guiding roller according to claim 10, characterized in that the seal consists of a ring (38) of a soft resilient material, which is pretensioned between a conically extending surface (40) of the part (20) rigidly connected to the shaft (14) and a surface of the bearing race (10) in each case.

## Revendications

1. Rouleau de guidage destiné au guidage d'un rail, comportant deux bagues de roulement (10, 110) qui sont montées tournantes sur un axe (14, 114) au moyen d'éléments de palier et qui soutiennent axialement et radialement les bagues de roulement (10, 110) sur cet axe (14, 114) les bords radialement extérieurs des côtés (16, 116) des bagues de roulement (10, 110) dirigés l'un vers l'autre étant conformés en surfaces de guidage (28, 128) pour le rail (30, 130), caractérisé par le fait qu'il est prévu au moins un élément (36,136,236,336) qui se prête élastiquement, qui est placé sous contrainte préalable, et qui pousse les deux bagues de roulement (10, 110) en les écartant l'une de l'autre, au moins à l'encontre des parties (12, 112) des éléments de palier qui assurent l'appui axial.

2. Rouleau de guidage selon la revendication 1, caractérisé par le fait que les deux côtés dirigés l'un vers l'autre (16, 116) des bagues de roulement (10, 110) délimitent un intervalle annulaire (16, 126) dans lequel est disposé l'élément élastique (36, 136, 236, 336) sous contrainte préalable.

3. Rouleau de guidage selon la revendication 1 ou 2, caractérisé par le fait que pour l'appui radial et l'appui axial des deux bagues de roulement (10, 110) sur l'axe (14, 114), on prévoit en tant qu'éléments de palier des éléments de roulement (12, 112), qui sont prévus entre les bagues de roulement (10, 110) et l'axe (14, 114), c est-à-dire entre un côté (18, 118) de la bague de roulement considérée (10, 110) situé à l'opposé de l'intervalle annulaire (26, 126) et une pièce (20, 120) dirigée vers ce côté et fixée à l'axe, laquelle présente une surface de roulement pour 1e roulement des éléments de roulement (12, 112).

4. Rouleau de guidage selon l'une des revendications 1 à 3, caractérisé par le fait que l'élément sous contrainte préalable est constitué par au moins une rondelle Belleville (236).

5. Rouleau de guidage selon l'une des revendications 1 à 3, caractérisé par le fait que l'élément sous contrainte préalable est constitué par au moins un ressort hélicoïdal (336).

6. Rouleau de guidage selon l'une des revendications 1 à 5, caractérisé par le fait que l'élément sous contrainte préalable est un anneau (36, 136, 236).

7. Rouleau de guidage selon la revendication 6, caractérisé par le fait que l'anneau (36, 136) est constitué par un matériau élastique mou.

8. Rouleau de guidage selon l'une des revendications 1 à 7, caractérisé par le fait qu'entre les bagues de roulement (10, 110) est prévu un joint d'étanchéité (36,136,262,362).

9. Rouleau de guidage selon l'une des revendications 1 à 8, caractérisé par le fait que les surfaces de guidage (28, 128) délimitent un espace qui s'élargit radialement vers l'extérieur.

10. Rouleau de guidage selon l'une des revendications 3 à 9, caractérisé par le fait qu'il est prévu un joint d'étanchéité (38) entre le côté (18) dirigé vers l'opposé de l'intervalle annulaire (26) de la bague annulaire (10) considérée, et la pièce (20) fixée à l'axe (14) et dirigée vers ce côté.

11. Rouleau de guidage selon la revendication 10, caractérisé par le fait que le joint est constitué par un anneau (38) réalisé en matériau élastique mou, qui est placé sous contrainte préalable entre une surface (40) qui s'élargit coniquement de la pièce (20) fixée à l'axe (14), et une surface de la bague de roulement (10) considérée.

Fig.1

Fig.2

Fig.3

Fig.4